# FASCICULE DE BREVET EUROPEEN

(11) **EP 0 664 013 B1**
(45) Date de publication et mention de la délivrance du brevet: **18.06.1997**
(21) Numéro de dépôt: 93922620.5
(22) Date de dépôt: 29.09.1993
(51) Int. Cl.: G02C 5/16

(54) **PROCEDE DE PRODUCTION D'UNE BRANCHE DE LUNETTES, ET BRANCHE REALISEE AU MOYEN D'UN TEL PROCEDE**
PRODUKTIONSVERFAHREN FÜR EINEN BRILLENBÜGEL UND EIN DAMIT HERGESTELLTER BRILLENBÜGEL
PROCESS FOR PRODUCING A SPECTACLE SIDE PIECE, AND SIDE PIECE FABRICATED BY SUCH PROCESS

(30) Priorité: 06.10.1992 IT VR920084
(43) Date de publication de la demande: 26.07.1995
(73) Titulaire: LIBO OPTICAL S.r.l., 32040 Pederobba (Treviso) (IT)
(72) Inventeur: BOF, Livio, I-31040 Segusino (IT)
(86) Numéro de dépôt international: IT9300101
(87) Numéro de publication internationale: WO9408265

(56) Documents cités:
- EP-A- 0 188 296
- DE-A- 2 101 245
- DE-A- 2 504 669
- FR-A- 2 655 162
- IT-B- 1 235 441
- US-A- 2 064 604
- US-A- 4 848 891

## Description

### DOMAINE TECHNIQUE

L'invention se réfère à un procédé de production d'une branche de lunettes.

Plus particulièrement, l'invention se réfère à un procédé de production d'une branche de lunettes qui soit apte à incorporer un mécanisme à mouvement flexible de la branche elle-même par rapport à la monture des lunettes. De plus, l'invention se réfère à une branche réalisée au moyen d'un tel procédé.

L'invention trouve son application principale dans le domaine de l'industrie pour la production de composants pour lunettes.

### ÉTAT DE LA TECHNIQUE

On connaît déjà dans la technique nombreux types de branche dotées de dispositifs permettant un mouvement à charnière élastique ou flexible.

Le brevet italien n. IT-B-1235441 décrit une branche du type à ressort pour montures de lunettes.

Une telle branche comporte une tige, sur l'une des extrémités de laquelle on l'obtient par injection une chemise en fibre qui est percée axialment de façon à recevoir intérieurement un mécanisme à fléchissement élastique, qui est en soi connu.

Un tel mécanisme comprend en général un corps cylindrique, à l'intérieur duquel se trouve un tirant métallique, l'une des extrémités duquel peut être articulée sur la monture des lunettes, tandis que l'autre extrémité est fixée à un élément formant butée d'appui pour un ressort disposé entre ledit corps cylindrique et ledit élément.

Latéralement par rapport au corps cylindrique se trouve un trou permettant la fixation, au moyen d'une vis ou d'une cheville, ou bien encore au moyen d'un couplage opportun à emboîtement, du dispositif à fléchissement élastique de la branche.

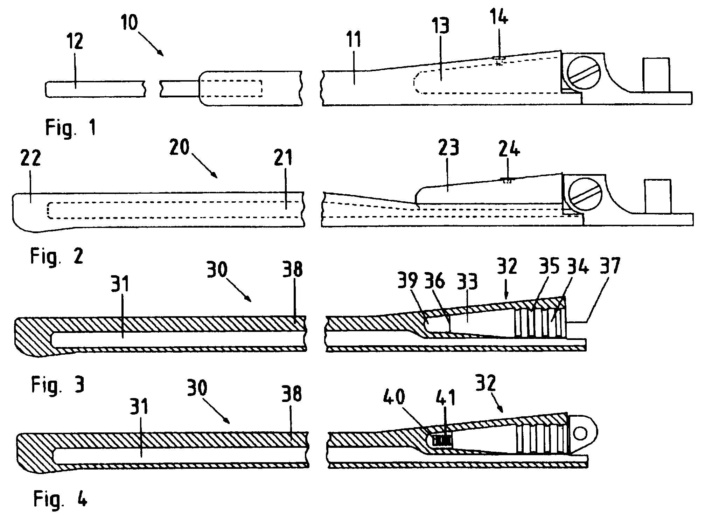

Une telle solution, qui est schématiquement représentée à la figure 1, implique nombreux inconvénients et désavantages, qui sont essentiellement dûs à remarquables pertes de temps pour l'assemblage, aux nombreux composants qui constituent l'ensemble, aux réduites stabilité et rigidité mécanique (parce-que une portion majeure de la branche ne dispose pas d'une âme métallique).

De plus, tout ça implique coûts de production qui sont relativement élevés.

D'après une deuxième forme de réalisation connue, qui est schématiquement illustrée à la figure 2, la branche comporte une tige métallique continue, à l'une des extrémités de laquelle est soudée une boîte métallique qui contient le mécanisme à fléchissement élastique (corps métallique, tirant, ressort).

En général, le corps métallique est fixé à la boîte par une vis.

Pendant le procédé d'injection du matériau synthétique autour de la tige métallique, l'on retient l'extrémité de la boîte métallique et l'on effectue par après l'injection; par conséquent, la boîte métallique reste découverte et en vue.

Cette solution implique aussi une série d'inconvénients et désavantages, qui sont principalement provoqués par la position de la boîte métallique contenant le mécanisme à fléchissement élastique.

En effet, étant donné que la boîte est dans une position extérieure par rapport au matériau injecté, la soudure entre ladite boîte et la tige métallique tend à céder, et à provoquer le décollement de la branche de la monture.

De plus, on peut constater avec le temps une certaine usure de la portion galvanisée à cause du contact de cette portion avec l'air.

En certaines conditions, en outre, la tige métallique peut se désengager entièrement du matériau injecté, et elle peut être désenfilée de celui-ci.

Encore, le mécanisme à fléchissement élastique est d'une manière générale fixé à la boîte par une vis, ce qui cause des coûts et temps d'assemblage élévés.

De plus, étant donné que les branches sont ensuite blutées, la boîte du mécanisme à fléchissement élastique doit être protégée des tiges de l'appareillage pour bluter; au but de réaliser une telle protection, la boîte métallique est entièrement coiffée au moyen d'une chemise en matériau plastique.

Ceci implique pertes de temps ultérieures et une augmentation du coût de production.

Il faut encore remarquer que l'ensemble du mécanisme à fléchissement élastique est dans ce cas soudé à la tige métallique avant l'opération d'injection du matériau synthétique.

Par conséquent, dans le cas où il-y-avait des déchets, ceux-ci ont un coût élévé parce-que le mécanisme dans son ensemble ne peut plus être aisément récupéré.

### DESCRIPTION DE L'INVENTION

La présente invention vise à remédier aux inconvénients et aux désavantages qui sont typiques de la technique antérieure; par conséquent, elle a comme but celui d'offrir un procédé de production d'une branche qui soit apte à être dotée d'un mécanisme à fléchissement élastique qui permet d'obtenir, à bas prix et à un temps de production très rapide, une branche ayant trèes bonnes caractéristiques de stabilité et de rigidité mécanique et qui comporte un nombre limité de composants.

Ce but est atteint au moyen d'un procédé de production selon la revendication 1 et d'une branche selon la revendication 6.

Les revendications dépendantes de celle-ci illustrent des formes de réalisation avantageuses de l'invention.

Le procédé de production d'une branche de lunettes selon l'invention comprend une première phase, dans laquelle une douille métallique, ouverte aux deux extrémités, est soudée à l'une des extrémités d'une tige métallique.

Cette douille est apte à coopérer, en oeuvre, avec un mécanisme à fléchissement élastique, par exemple du type décrit ci-dessus.

Pendant une deuxième phase, d'injection du matériau synthétique autour de la tige métallique, une deuxième tige est insérée dans la douille, d'une telle façon qu'elle sort des deux extrémités de la douille elle-même.

Une fois que le matériau synthétique ait été injecté, ladite deuxième tige est retirée, en laissant donc libres les deux extrémités de la douille et en formant une chambre libre du matériau synthétique en correspondence de l'extrémité intérieure de ladite douille.

Enfin, le mécanisme à fléchissement élastique est inséré dans la douille et bloqué à celle-ci, en général à la pression et/ou au moyen d'adhésifs opportuns.

La branche produite par le procédé décrit ci-dessus comporte des nombreux avantages par rapport aux solutions connues.

En effet, la douille est entièrement noyée dans le matériau synthétique, de façon à éviter tout problème qui peut dériver de la rupture de la soudure entre la douille et la tige métallique ou bien d'une oxydation éventuelle des parties mécaniques, en fournissant une stabilité et une rigidité mécanique améliorée à l'ensemble de la branche.

De plus, on ouvre la possibilité de colorier les parties en matériau synthétique jusqu'au niveau du pivot de rotation de la branche, en fournissant de cette façon un effet esthétique amélioré des lunettes.

Dans le cas où le matériau synthétique injecté soit transparent, on rend possible d'observer le fonctionnement opératif du mécanisme à fléchissement élastique, ce qui peut constituer une attraction pour vendre le produit.

La branche ainsi produite n'est pas pourvue de vis de blocage, et ce fait contribue à baisser temps et coûts de production d'une façon considérable.

Enfin, dans le cas où il-y-avait des déchets, ces déchets ne se rapportent jamais au mécanisme à fléchissement élastique, qui est inséré dans la douille seulement une fois que l'injection a été effectuée et le matériau s'est solidifié.

Par conséquent, d'économies rémarquables au niveau de déchets peuvent bien être prises en considération.

### ILLUSTRATION DES DESSINS

Autres caractéristiques et avantages de l'invention ressortiront de la description suivante, donnée à titre d'exemple non limitatif, à l'aide des figures illustrées dans les dessins.
Les figures 1 et 2 montrent, en vue latérale schématique, un couple de branches de lunettes de type connu;
La figure 3 montre, en section latérale schématique, une branche produite au moyen du procédé selon l'invention, après l'injection;
La figure 4 montre la branche de la figure 3, dans laquelle on a inséré le mécanisme à fléchissement élastique.

### DESCRIPTION D'UN MODE DE RÉALISATION DE L'INVENTION

La figure 1 montre, de façon schématique, une branche 10 de lunettes du type connu.

La branche 10 comporte en général un corps 11 en matériau synthétique injecté et doté d'un trou antérieur, dans lequel est logée une tige métallique 12, et d'un trou postérieur dans lequel est logé un mécanisme 13 à fléchissement élastique fixé au corps 11 par une vis 14.

La figure 2 montre une deuxième branche 20 du type connu, comportant une tige métallique 21 noyée dans un matériau syntéthique 22.

Une boîte métallique 23, dans laquelle un mécanisme à fléchissement élastique est fixé au moyen d'une vis 24, est soudée à la tige 21.

La boîte entière 23 est disposée extérieurement par rapport au matériau synthétique 22.

Les deux formes de réalisation décrites ci-dessus impliquent les inconvénients et les désavantages qui ont été évidentiés par avant.

La figure 3 illustre une branche 30 produite au moyen du procédé selon la présente invention.

La branche 30 comporte, de manière générale, une tige métallique 31, à l'une des extrémités de laquelle est soudée, ou de toute façon fixée, une douille 32 ayant une partie 33 en général tronconique et une partie 34 en général cylindrique et dotée d'une série de nervures extérieures 35.

De plus, la douille 32 est percée (36, 37) en correspondence des deux bases.

Selon l'invention, l'ensemble tige 31 - douille 32 est coiffé par injection avec un matériau syntéthique, en recouvrant ainsi la douille entière 32.

Dans ce cas, les nervures 35 permettent au matériau synthétique d'adhérer plus fermement à la douille, et de la maintenir donc solidement en position.

Pendant l'injection du matériau synthétique 38, une tige (non illustrée) est insérée dans la douille 32 d'une telle façon qu'elle sorte du trou 36 d'une distance prédéterminée.

Une fois que l'opération d'injection soit terminée, cette tige est retirée de la douille 32, en formant donc une chambre 39 libre du matériau synthétique 38.

Ensuite, un mécanisme en soi connu à fléchissement élastique est inséré dans la douille 32 et fixé à celle-ci par des moyens opportuns, en général à la pression et/ou par des adhésifs et/ou par des chevilles, vis ou bien par encastrement.

La figure 4 illustre une telle situation, dans laquelle on peut voir la partie terminale 40 du tirant et le ressort 41 du mécanisme.

Soit le procédé de production de la branche 30, soit la branche elle-même permettent d'atteindre les avantages évidentiés par avant, qui ne seront donc pas répétus une autre fois.

L'invention a été décrite en se référant à une forme de réalisation particulièrement avantageuse.

Il est évident que l'invention comporte des nombreuses variantes, dans le domaine des équivalences mécaniques.

Par conséquent, l'invention englobe des formes de réealisation dans lequelles le mécanisme à fléchissement élastique soit différent par rapport à celui qui a été décrit ci-dessus, ainsi que des formes de réalisation dans lesquelles l'on utilise les types les plus différents de matériau synthétique, et toute tonalité de couleur.

En outre, l'invention englobe des formes de réalisation selon lesquelles le matériau synthétique coiffe seulement une partie de la tige métallique formant l'âme de la branche, et des formes de réalisation selon lesquelles cette âme soit subdivisée en deux portions distinctes, l'une desquelles est couplée à la douille, et l'autre débouche du matériau synthétique injecté.

Selon un mode de réalisation ultérieur de l'invention, l'âme métallique est chauffée et ensuite poussée à la pression dans une plaque en matériau synthétique, au but de former la branche de lunettes.

Dans ce cas il est nécessaire, avant d'effectuer l'insertion de l'âme métallique, de former sur la plaque un évidement qui soit apte à accueillir la douille.

L'évidement peut être obtenu, par exemple, au moyen d'une perceuse ou bien en insérant dans la plaque une tige métallique surchauffée.

En outre, l'invention comporte un mode de réalisation selon lequel l'âme métallique est coiffée par le matériau synthétique seulement en correspondance de la douille.

Dans ce cas la jupe en matériau synthétique destinée à coiffer la douille est obtenue par moulage séparé, et elle est solidarisée de la douille, qui contient le mecanisme à fléchissement élastique, de façon à protéger ce dernier contre les agents extérieurs.

La jupe peut être solidarisée de la douille d'une façon permanente (par exemple au moyen d'un adhésif), ou bien d'une façon détachable (par exemple au moyen de vis ou par emboîtement).

Dans ce dernier cas le mécanisme à fléchissement élastique peut être, le cas échéant, remplacé.

## Revendications

1. Procédé de production d'une branche (30) de lunettes, ladite branche (30) comportant une première tige métallique (31) au moins partiellement noyée dans un matériau synthétique, dans lequel une douille (32) comprenant une ouverture (36, 37) à chacune de ses extrémités est fixée au voisinage d'une extrémité de ladite première tige métallique (31), dans lequel au moins ladite extrémité de ladite tige et ladite douille sont ensuite coiffées par un matériau synthétique destiné à protéger ladite douille (32) contre les agents extérieurs, de manière à former une chambre (39) à l'intérieur du matériau synthétique contiguë à l'une (36) des ouvertures de ladite douille (32), et dans lequel un mécanisme à ressort est ensuite inséré dans l'autre des ouvertures de ladite douille (32) et rendu solidaire de celle-ci.

2. Procédé selon la revendication 1, dans lequel ledit matériau synthétique est conformé en jupe venant de moulage et coiffant au moins ladite douille (32).

3. Procédé selon la revendication 1, dans lequel ladite tige métallique (31) est chauffée jusqu'à une température prédéterminée, et elle est ensuite insérée avec une pression prédéterminée dans une plaque en matériau synthétique destinée à former la branche de lunette, un évidement destiné à recevoir ladite douille (32) étant au préalable pratiqué dans ladite plaque.

4. Procédé selon la revendication 1, dans lequel la branche est obtenue par injection d'un matériau synthétique, dans lequel une deuxième tige est insérée dans ladite douille (32) d'une façon telle qu'elle déborde d'une distance prédéterminée de l'une (36) desdits ouvertures, dans lequel on effectue ensuite un'opération d'injection de matériau synthétique au but de coiffer ladite première tige métallique (31) et dans lequel ladite douille (32), ladite deuxième tige étant ensuite retirée de la douille (32) en formant de cette façon la chambre (39) à l'intérieur du matériau synthétique injecté contiguë à ladite une des ouvertures (36).

5. Procédé selon la revendication 4, dans lequel ladite première tige métallique comporte deux portions distinctes, une extrémité de chacune desquelles déborde du matériau synthétique injecté.

6. Branche (30) de lunettes comportant une première tige métallique (31) au moins partiellement noyée dans un matériau synthétique, caractérisée en ce qu'une douille (32) comprenant une ouverture (36, 37) à chacune de ses extrémités est fixée au voisinage d'une extrémité de ladite première tige métallique (31), en ce qu'au moins ladite extrémité de ladite tige et ladite douille sont coiffées par un matériau synthétique destiné à protéger ladite douille (32) contre les agents extérieurs, en ce qu'une chambre (39) à l'intérieur du matériau synthétique est formée contiguë à l'une (36) des ouvertures de ladite douille (32), en ce qu'un mécanisme à ressort est inséré dans l'autre des ouvertures de ladite douille (32) et rendu solidaire de celle-ci, et en ce que ladite douille (32) est constituée par deux portions respectives (33, 34) ayant une forme prédéterminée.

7. Branche (30) selon la revendication 6, caractérisée en ce qu'une desdites portions respectives (34) est essentiellement cylindrique et l'autre portion (33) est essentiellement tronconique et porte le mécanisme à ressort.

8. Branche (30) selon la revendication 7, caractérisée en ce que ladite portion essentiellement cylindrique (34) est dotée d'une série de nervures (35) au but d'améliorer l'adhésion du matériau synthétique à la douille (32).

9. Branche selon l'une des revendications 5 à 8, caractérisée en ce que le mécanisme à ressort est rendu solidaire de la douille (32) au moyen de l'application de pression et/ou d'adhésifs opportuns et/ou par chevilles, vis ou emboîtement.

## Patentansprüche

1. Herstellungsverfahren eines Brillenbügels (30), bei dem der Bügel (30) einen ersten, mindestens teilweise in ein synthetisches Material eingebetteten Metallstab (31) umfaßt, wobei eine Buchse (32) mit einer Öffnung (36, 37) an jedem seiner Enden in der Nähe eines Endes des ersten Metallstabs (31) befestigt ist, wobei mindestens das Ende des Stabs und der Buchse anschließend mit synthetischem Material überdeckt sind, das die Buchse (32) vor äußeren Einflüssen schützt, um eine, im Innern des synthetischen Materials an eine der Öffnungen (36) der Buchse (32) angrenzende Kammer (39) zu bilden, und wobei eine Federvorrichtung anschließend in die andere der Öffnungen der Buchse (32) eingeführt und mit letzterer fest verbunden wird.

2. Verfahren nach Anspruch 1, bei dem das synthetische Material die Form einer Schürze hat, die verspritzt wird und mindestens die Buchse (32) überdeckt.

3. Verfahren nach Anspruch 1, bei dem der Metallstab (31) bis zu einer vorbestimmten Temperatur erhitzt wird und dann bei einem vorbestimmten Druck in eine Platte aus synthetischem Material eingeführt wird, die den Brillenbügel bildet, wobei vorher in der Platte eine Aussparung eingearbeitet wird, um die Buchse (32) aufzunehmen.

4. Verfahren nach Anspruch 1, bei dem der Bügel durch Einspritzen synthetischen Materials erzielt wird, wobei ein zweiter Stab in die Buchse (32) so eingeführt wird, daß dieser Stab auf eine vorbestimmte Entfernung aus einer (36) der Öffnungen herausragt, wobei dann das Einspritzen des synthetischen Materials ausgeführt wird, damit der erste Metallstab und die Buchse (32) überdeckt werden, und wobei der zweite Metallstab anschließend aus der Buchse (32) gezogen wird, wodurch die Kammer (39) innerhalb des eingespritzten synthetischen Materials an eine (36) der Öffnungen angrenzend gebildet wird.

5. Verfahren nach Anspruch 4, wobei der erste Metallstab zwei verschiedene Abschnitte umfaßt, wobei ein Ende jedes Abschnitts aus dem eingespritzten synthetischen Material herausragt.

6. Brillenbügel (30) mit einem ersten Metallstab (31) der mindestens teilweise in einem synthetischen Material eingebettet ist, dadurch gekennzeichnet, daß eine Buchse (32) mit einer Öffnung (36, 37) jeweils an ihren beiden Enden in der Nähe des ersten Metallstabs (31) befestigt ist, daß mindestens das Ende des Stabs und der Buchse von einem synthetischen Material überdeckt sind, das die Buchse (32) vor äußeren Einflüssen schützt, daß sich im Innern des synthetischen Materials eine Kammer (39) befindet, die an eine (36) der Öffnungen der Buchse (32) grenzt, daß eine Federvorrichtung in die andere der Öffnungen der Buchse (32) eingeführt und mit letzterer fest verbunden ist, und daß die Buchse (32) aus zwei entsprechenden Abschnitten (33, 34) mit einer vorbestimmten Form besteht.

7. Bügel (30) nach Anspruch 6, dadurch gekennzeichnet, daß einer der entsprechenden Abschnitte (34) im wesentlichen zylindrisch ist, und der andere im wesentlichen kegelstumpfförmig ist, und die Federvorrichtung trägt.

8. Bügel (30) nach Anspruch 7, dadurch gekennzeichnet, daß der im wesentlichen zylindrische Abschnitt (34) mit einer Anzahl von Rippen (35) versehen ist, um die Haftung des synthetischen Materials an der Buchse (32) zu verbessern.

9. Bügel nach einer den Ansprüchen von 5 bis 8, dadurch gekennzeichnet, daß die Federvorrichtung mit der Buchse (32) durch Druck und/oder passende Klebemittel und/oder durch Stifte, Schrauben oder Einrasten fest verbunden wird.

## Claims

1. Process for producing a spectacle side piece (30), wherein said side piece (30) comprises a first metallic rod (31) which is at least partially buried in a synthetic material, wherein a bush (32) comprising an aperture (36, 37) at each end is fixed close to one end of said fist metallic rod (31), wherein at least said end of said rod and of said bush are thereafter coated by a synthetic material suitable for protecting said bush against external agents, in such a way as to form a chamber (39) inside of said synthetic material, adjacent to one end (36) of said bush (32), and wherein a spring mechanism is then inserted into the other aperture of said bush (32) and it is made integral to the latter.

2. Process according to claim 1, wherein said synthetic material has the shape of a skirt which is moulded and which coates at least said bush (32).

3. Process according to claim 1, wherein said metallic rod (31) is heated up to a predetermined temperature, and it is then inserted at a predetermined pressure into a plate made of a synthetic material and suitable for forming the spectacle side piece, a cavity suitable for housing said bush (32) being previously formed in said plate.

4. Process according to claim 1, wherein said side piece is obtained through injection of a synthetic material, wherein a second rod is inserted into said bush (32) in such a way as it projects by a predetermined distance from one (36) of said apertures, wherein a synthetic material is then injected in order to coat said first metallic rod and said bush (32), and wherein said second rod is then removed from the bush (32) thereby forming the chamber (39) inside the injected synthetic material, adjacent to one (36) of said apertures.

5. Process according to claim 4, wherein said first metallic rod comprises two distinct portions, one end of each portion projecting from the injected synthetic material.

6. Side piece (30) for spectacles, comprising a first metallic rod (31) at least partially buried in a synthetic material, characterised in that a bush (32) comprising an aperture (36, 37) at each end is fixed close to one end of said fist metallic rod (31), in that at least said end of said rod and of said bush are coated by a synthetic material suitable for protecting said bush against external agents, in that a chamber (39) is formed inside of said synthetic material, adjacent to one end (36) of said bush (32), in that a spring mechanism is then inserted into the other aperture of said bush (32) and it is made integral to the latter, and in that said bush (32) is constituted by two respective portions (33, 34) having a predetermined shape.

7. Side piece (30) according to claim 6, characterised in that one of said respective portions (34) is substantially cylindrical, while the other portion is substantially frusto-conical and it bears said spring mechanism.

8. Side piece (30) according to claim 6, characterised in that said substantyally cylindrical portion (34) is provided with a series of ribs (35) in order to improve the adhesion of the synthetic material to the bush (32).

9. Side piece according to anyone of claims 5 to 8, characterised in that the spring mechanism is made integral of said bush by means of applied pressure and/or suitable adhesives and/or pins, screws, or joints.
